# EUROPEAN PATENT APPLICATION

(11) **EP 4 538 417 A1**
(43) Date of publication of application: **16.04.2025**
(21) Application number: 23820143.8
(22) Date of filing: 09.06.2023
(51) Int. Cl.: C23C 28/00, C23C 28/02, C25D 5/50, C25D 9/04, C25D 9/06, C25D 3/20, C25D 7/06, C23C 2/06, C23C 2/40

(54) **HIGH-STRENGTH HOT-DIP GALVANIZED STEEL SHEET HAVING GOOD PLATING QUALITY, STEEL SHEET FOR PLATING, AND METHODS FOR MANUFACTURING SAME**

(30) Priority: 10.06.2022 KR 20220071024
(71) Applicant: POSCO Co., Ltd, Pohang-si, Gyeongsangbuk-do 37859 (KR)
(72) Inventor: JUNG, Jin-Ho, Gwangyang-si, Jeollanam-do 57807 (KR); LEE, Won-Hwi, Gwangyang-si, Jeollanam-do 57807 (KR); KWON, Seong-Choon, Gwangyang-si, Jeollanam-do 57807 (KR); KANG, Ki-Cheol, Gwangyang-si, Jeollanam-do 57807 (KR); JUNG, Ki-Taek, Gwangyang-si, Jeollanam-do 57807 (KR); KIM, Eun-Young, Gwangyang-si, Jeollanam-do 57807 (KR)
(74) Representative: Meissner Bolte Partnerschaft mbB
(86) International application number: PCT/KR2023/007971
(87) International publication number: WO 2023/239208

(57) **Abstract**

The present invention relates to a high-strength hot-dip galvanized steel sheet having excellent plating quality, a steel sheet for plating to manufacture same, and methods for manufacturing same. The steel sheet for plating, according to an aspect of the present invention, comprises, by weight%, 1.0-8.0 % of Mn, 0.05-3 % of Si, 0.06-0.4 % of C, 0.005-3.0 % of Al, 0.04 % or less of P, 0.015 % or less of S, 1.5 % or less of Cr, 0.005% or less of B, and the remainder of Fe and inevitable impurities, wherein each of a GDS profile of a Mn component and a GDS profile of a Si component, which are observed from the surface in the depth direction, sequentially includes a maximum point and a minimum point, wherein the difference (converted concentration difference of Mn) between a value obtained by dividing the Mn concentration at the maximum point in the GDS profile of the Mn component by the Mn concentration of a base material and a value obtained by dividing the Mn concentration at the minimum point in the GDS profile of the Mn component by the Mn concentration of the base material may be 80 % or greater, and the difference (converted concentration difference of Si) between a value obtained by dividing the Si concentration at the maximum point in the GDS profile of the Si component by the Si concentration of the base material, and a value obtained by dividing the Si concentration at the minimum point in the GDS profile of the Si component by the Si concentration of the base material may be 50 % or greater. Here, in a case where no minimum points appear within 5 µm in depth, the point at a depth of 5 µm is considered to be the point at which the minimum point appears.

## Description

### Technical Field

The present disclosure relates to a high-strength hot-dip galvanized steel sheet having excellent plating quality, a steel sheet for plating to manufacture the same, and a method for manufacturing the same.

### Background Art

In recent years, in the automobile industry, safety has been improved and weight reductions due to reduction in the thickness have been achieved by applying a high-strength steel sheet for an automotive steel material. Martensitic steel and TRIP steel have been developed as steel materials that can be applied preferably as the automotive steel materials. The high-strength steel includes various alloying elements, as compared to general steel. In particular, the high-strength steel includes a lot of elements having a high oxidation tendency, as compared to Fe, such as Mn, Si, Al, Cr, and B.

In hot-dip galvanizing, plating quality is determined by a surface condition of an annealed steel sheet immediately before plating, and plating properties may deteriorate due to the formation of surface oxides during annealing caused by the elements such as Mn, Si, Al, Cr, and B added to secure physical properties of the steel sheet. That is, during the annealing process, the elements may diffuse to surfaces thereof and react with a trace amount of oxygen or water vapor present in an annealing furnace to form single or complex oxides of the elements on the surface of the steel sheet, thereby reducing reactivity of the surface. The surface of the annealed steel sheet with the reduced reactivity may interfere with wettability of a hot-dip galvanizing bath, causing non-plating in which a plating metal is not attached locally or entirely to the surface of the plated steel sheet. In addition, these oxides significantly deteriorate the plating quality of plated steel sheets, such as peeling of a plating layer due to insufficient formation of an alloying inhibition layer (Fe₂Al₅) required to secure adhesion of the plating layer during a hot-dip plating process.

Several technologies have been proposed to improve the plating quality of the high-strength hot-dip galvanized steel sheet. Thereamong, Patent Document 1 discloses a technology providing a hot-dip galvanized steel sheet or a galvannealed steel sheet having excellent plating quality, by controlling an air-fuel ratio of air and fuel to 0.08 to 0.95 during the annealing process, oxidizing the steel sheet in a direct flame furnace in an oxidizing atmosphere to form an iron oxide including Si, Mn or Al alone or complex oxides to a certain depth inside the steel sheet, and then reducing and annealing the iron oxide in a reducing atmosphere and then performing hot-dip galvanizing.

When using a method of reducing after oxidation in the annealing process as in Patent Document 1, since elements with a high affinity for oxygen, such as Si, Mn, Al, and the like, are internally oxidized at a certain depth from a surface layer of the steel sheet and diffusion to the surface layer is suppressed, Si, Mn, or Al alone or complex oxides thereof are relatively reduced, so that wettability with zinc may be improved and non-plating may be reduced. However, in the case of steel types with Si added, Si is concentrated directly below the iron oxide during the reduction process, thereby forming a band-shaped Si oxide, so that peeling occurs in a surface layer portion including a plating layer, that is, peeling occurs at an interface between the reduced iron and base steel sheet therebelow, causing a problem in that it is difficult to secure adhesion of the plating layer.

Meanwhile, as another method for improving plating properties of a high-strength hot-dip galvanized steel sheet, Patent Document 2 discloses a method of improving the plating properties thereof by maintaining a dew point in an annealing furnace at a high level and internally oxidizing alloying elements such as Mn, Si, Al, and the like, which are easily oxidized, inside the steel, thereby reducing oxides which are externally oxidized on a surface of the steel sheet after annealing. However, in the method according to Patent Document 2, the problem of plating properties caused by the external oxidation of Si, which is easily to be internally oxidized, may be solved, but when a large amount of Mn, which is relatively difficult to be internally oxidized is added, the effect is insignificant.

In addition, even if the plating properties are improved by internal oxidation, linear non-plating may occur due to surface oxides formed unevenly on the surface, or when a galvannealed steel sheet (a GA steel sheet) is manufactured through an alloying heat treatment after plating, a problem such as linear defects due to uneven alloying may occur on the surface of the galvannealed steel sheet.

As another prior art, there is a method of suppressing the diffusion of alloying elements to the surface during annealing by performing Ni pre-plating before annealing. However, this method is also effective in suppressing the diffusion of Mn, but has the problem of not sufficiently suppressing the diffusion of Si.

### [Prior art Document]

### [Patent Document]

(Patent Document 1) Korean Patent Publication No. 2010-0030627
(Patent Document 2) Korean Patent Publication No. 2009-0006881

### Summary of Invention

### Technical Problem

An aspect of the present disclosure is to provide a hot-dip galvanized steel sheet having excellent plating quality and a method for manufacturing the same, in which non-plating does not occur and the problem of peeling of a plating layer is solved.

Another aspect of the present disclosure is to provide a hot-dip galvanized steel sheet that can be manufactured to form a galvannealed steel sheet having excellent surface quality without linear defects occurring, even when an alloying heat treatment is performed after plating, and a method for manufacturing the same.

Another aspect of the present disclosure is to provide a steel sheet for plating that can manufacture the hot-dip galvanized steel sheet having excellent plating quality, and a method for manufacturing the same.

An object of the present disclosure is not limited to the above description. The object of the present disclosure will be understood from the entirety of the contents of the present specification, and a person skilled in the art to which the present disclosure pertains will understand an additional object of the present disclosure without difficulty.

### Solution to Problem

According to an aspect of the present disclosure, provided is a steel sheet, the steel sheet including by weight%, 1.0 to 8.0% of Mn, 0.05 to 3% of Si, 0.06 to 0.4% of C, 0.005 to 3.0% of Al, 0.04% or less of P, 0.015% or less of S, 1.5% or less of Cr, 0.005% or less of B, with a balance of Fe and inevitable impurities, wherein each of a GDS profile of an Mn element and a GDS profile of an Si element, observed from a surface thereof in a depth direction, sequentially includes a maximum point and a minimum point, a difference between a value obtained by dividing a Mn concentration at the maximum point in the GDS profile of the Mn element by a Mn concentration of a base material, and a value obtained by dividing a Mn concentration at the minimum point in the GDS profile of the Mn element by the Mn concentration of the base material (a difference of converted concentration of Mn) may be 80% or more, a difference between a value obtained by dividing a Si concentration at the maximum point in the GDS profile of the Si element by a Si concentration of a base material, and a value obtained by dividing a Si concentration at the minimum point in the GDS profile of the Si element by the Si concentration of the base material (a difference of converted concentration of Si) may be 50% or more.

Wherein, when no minimum points appear within 5 µm in depth, the point at a depth of 5 µm is considered to be a point at which the minimum point appears.

According to another aspect of the present disclosure, a hot-dip galvanized steel sheet may include the steel sheet for plating described above and a hot-dip galvanized layer formed on the steel sheet for plating.

According to another aspect of the present disclosure, a method for manufacturing a steel sheet for plating may include: preparing a base steel sheet including by weight%, 1.0 to 8.0% of Mn, 0.05 to 3% of Si, 0.06 to 0.4% of C, 0.005 to 3.0% of Al, 0.04% or less of P, 0.015% or less of S, 1.5% or less of Cr, 0.005% or less of B, with a balance of Fe and inevitable impurities; performing electroplating on the base steel sheet to form an Fe plating layer including 5 to 50 wt% of oxygen; and annealing the base steel sheet on which the Fe plating layer is formed by maintaining at a temperature range of 600 to 950°C for 5 to 120 seconds in an annealing furnace with 1 to 70% H₂-remaining N₂ gas atmosphere, controlled at a dew point temperature of -15 to +30°C.

According to another aspect of the present disclosure, a method for manufacturing a hot-dip galvanized steel sheet may include: preparing a base steel sheet including by weigh%, 1.0 to 8.0% of Mn, 0.05 to 3% of Si, 0.06 to 0.4% of C, 0.005 to 3.0% of Al, 0.04% or less of P, 0.015% or less of S, 1.5% or less of Cr, 0.005% or less of B, with a balance of Fe and inevitable impurities; performing electroplating on the base steel sheet to form an Fe plating layer including 5 to 50 wt% of oxygen; obtaining a steel sheet for plating by annealing the base steel sheet on which the Fe plating layer is formed by maintaining at a temperature range of 600 to 950°C for 5 to 120 seconds in an annealing furnace with 1 to 70%H₂-remaining N₂ gas atmosphere, controlled at a dew point temperature of -15 to +30°C; and dipping the steel sheet for plating in a hot-dip galvanizing bath including 0.1 to 0.3% of Al, with a balance of Zn and inevitable impurities and maintaining to be in a temperature range of 440 to 550°C.

### Advantageous Effects of Invention

As described above, in the present disclosure, a hot-dip galvanized steel sheet in which a phenomenon in which non-plating occurs during hot-dip galvanizing is significantly improved and plating adhesion is improved by forming a pre-plating layer and controlling concentration profiles of Mn and Si elements therein, may be provided.

In addition, according to an aspect of the present disclosure, even if an alloying heat treatment is performed on a hot-dip galvanized steel sheet of the present disclosure, linear defects, or the like, occurring on the surface of the obtained galvannealed steel sheet may be prevented, so that a galvannealed steel sheet with excellent surface quality may be provided.

### Brief description of drawings

FIG. 1 is a schematic diagram of a GDS profile measured after removing a plating layer of a hot-dip galvanized steel sheet manufactured of a cold-rolled steel sheet electroplated with Fe.
FIG. 2 is a schematic diagram of a process in which a base steel sheet having an Fe plating layer containing oxygen formed thereon is annealed in an atmosphere having a high dew point.

### Best Mode for Invention

Hereinafter, a high-strength hot-dip galvanized steel sheet having excellent plating quality according to an aspect of the present disclosure, which was completed through the research by the present inventor, will be described in detail. It should be noted that a concentration of each element in the present disclosure means weight%, unless otherwise specified. In addition, an Fe electroplating amount is a plating amount measured as a total amount of Fe included in a plating layer per unit area, and oxygen and inevitable impurities in the plating layer were not included in the plating amount.

In addition, unless otherwise defined, a concentration and concentration profile referred to in the present disclosure mean a concentration and concentration profile measured using GDS, i.e., a glow discharge optical emission spectrometer.

Hereinafter, the present disclosure will be described in detail.

It is known that the cause of non-plating and deterioration of plating adhesion in a steel sheet containing large amounts of Mn and Si is due to surface oxides formed when alloying elements such as Mn, Si, and the like, are oxidized on the surface, during a process in which a cold-rolled steel sheet is annealed at high temperatures.

As a method of forming an oxide layer containing a large amount of oxygen to suppress the diffusion of alloying elements such as Mn, Si, and the like, to the surface, an oxidation-reduction method may be used, the method in which an oxide layer is oxidized during a temperature increase and then reduced again by maintaining the oxide layer in a reducing atmosphere, or a method in which an iron oxide is coated on a surface of a base steel sheet and then heat treated, may be used. However, since the iron oxide firmly formed on the surface of the base steel sheet is a mixture of FeO, Fe₃O₄, and Fe₂O₃, which are difficult to reduce, and while the surface is reduced to metallic steel during the annealing process in a reducing atmosphere, an interface between the iron oxide layer and the base steel sheet has a slow reduction rate, making it difficult to completely reduce, and Mn and Si oxides accumulate at the interface to form a continuous oxide layer. Therefore, although wettability with molten zinc is improved, the oxide layer may easily crumble, causing a problem in which the plating layer is peeled off.

Meanwhile, when an internal oxidation method at annealing in which alloying elements such as Mn, Si, and the like, are oxidized inside steel, by increasing oxygen partial pressure or a dew point inside an annealing furnace during a heat treatment process, is applied, Mn and Si oxides are preferentially formed on a surface of the steel during the heat treatment process, and then Mn and Si are oxidized by oxygen diffused into the steel, thereby inhibiting surface diffusion. Accordingly, a thin oxide film is formed on the surface of the base steel sheet, and if a surface of a cold-rolled steel sheet is not completely homogeneous before annealing, or if there is a local deviation in oxygen partial pressure, temperature, or the like, the wettability is uneven during hot-dip galvanizing, causing non-plating, or if the thickness of the oxide film is uneven during an alloying heat treatment process after galvanizing, causing a difference in a degree of alloying, there is a tendency for linear defects that can be easily identified with the naked eye to occur.

In order to solve the problems of the above technology, the present inventors have attempted to manufacture a hot-dip galvanized steel sheet having an attractive surface and no plating peeling problem by controlling the presence of Mn and Si, which are oxidizing elements, on the surface of the steel sheet for plating as follows.

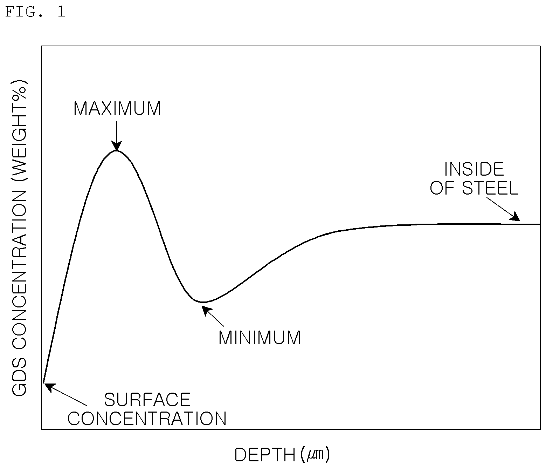

That is, the steel sheet according to an embodiment of the present disclosure may have the following characteristics in terms of the GDS concentration profile of Mn and Si. A steel sheet for plating of the present disclosure will be described in detail with reference to the GDS profile of FIG. 1.

FIG. 1 is a graph schematically illustrating a typical GDS profile of an Mn element that may appear from a surface portion after a galvanized layer is removed from a hot-dip galvanized steel sheet including the steel sheet of the present disclosure. In the graph, a vertical axis represents a concentration of alloying elements such as Mn, Si, and the like, and a horizontal axis represents a depth. As the graph exemplified in FIG. 1 above, the steel sheet for plating of the present disclosure may have the concentration profile of an Mn element and the concentration profile of an Si element sequentially having a maximum point and a minimum point, observed from a surface (interface with plated layer in case of hot-dip galvanizing) thereof in a depth direction. Here, sequentially having the maximum point and the minimum point does not necessarily mean that the maximum point appears first in the depth direction from the surface (interface), and in some cases, means that the minimum point may appear first, and then the maximum point and the minimum point should appear sequentially thereafter. However, in some aspects, the minimum point may not appear, and in this case, the internal concentration in the 5 µm depth region may be a concentration of the minimum point. In addition, the concentration of alloying elements on the surface may have a lower value than the concentration at the maximum point, but in some cases, a minimum point with a low concentration of alloying elements may appear between the surface and the maximum point.

In the GDS concentration profile exemplified in FIG. 1 above, although not limited thereto, the surface layer portion corresponds to an Fe plating layer with a low concentration of alloying elements since the alloying elements are not greatly diffused from a base steel sheet, the maximum point corresponds to a region in which internal oxides of alloying elements formed near an interface between the Fe plating layer and the base steel sheet are concentrated, and the minimum point appearing on a side of the base steel sheet in the Fe plating layer corresponds to a region in which alloying elements diffuse to the Fe plating layer not including the alloying elements and are diluted, or a region in which alloying elements diffuse to the maximum point at which internal oxidation occurs and are depleted.

In an embodiment of the present disclosure, the maximum point may be formed at a depth of 0.05 to 1.0 µm from a surface of the steel sheet. If the maximum point appears in a region deeper than the region described above, it may not be determined to be a maximum point due to the effect of the present disclosure. In addition, the minimum point can be formed at a location within 5 µm of depth of the surface of the steel sheet. As described above, if the minimum point is not formed at the location within 5 µm of depth, the 5 µm of depth may be determined to be a point at which the minimum point is formed. Since the concentration at the location within 5 µm of depth is substantially the same as the concentration of a base material, it can be considered to be a point at which the concentration no longer decreases.

In this case, as the difference between the converted concentration at the maximum point of the corresponding element (a value obtained by dividing the concentration thereof at the corresponding point by the concentration of the base material, expressed in units of %) and the converted concentration at the minimum point thereof in the Mn concentration profile and the Si concentration profile increases, Mn and Si diffusing to the surface may be reduced, which is important. In an embodiment of the present disclosure, in the case of Mn, the converted concentration value at the maximum point of Mn - the converted concentration value at the minimum point of Mn may be 80% or more, and in the case of Si, the converted concentration value at the maximum point of Si - the converted concentration value at the minimum point of Si may be 50% or more. Si is an element with a stronger oxidizing property than Mn, and since internal oxidation easily occurs even inside the base steel sheet with a low concentration of oxygen, oxidation may occur in a wider region than Mn. Therefore, even if the difference between the converted concentrations at the maximum point and the minimum point of Si is smaller than that of Mn, it cannot be considered that the degree of internal oxidation is insignificant. As a result of experiments conducted by the present inventors under various conditions, when the above-described conditions are satisfied, a hot-dip galvanized steel sheet having good plating adhesion and in which non-plating does not occur during hot-dip galvanizing, may be obtained. However, if the difference between the converted concentrations at the maximum and minimum points of Mn is less than 80%, or if the difference between the converted concentrations at the maximum and minimum points of Si is less than 50%, there may be a problem of point or linear non-plating or plating peeling. That is, as described above, it is possible to prevent the formation of oxides of Mn and Si on the surface, so that an ultra-high strength hot-dip galvanized steel sheet having an attractive surface and good plating adhesion may be manufactured, and even if a subsequent alloying heat treatment process is performed, it is possible to suppress the occurrence of defects such as linear defects on the surface. The greater the difference of converted concentration values, the more advantageous it is, so there is no need to set an upper limit for the values. However, considering the contents of the elements included, the difference of converted concentration values may be set to 400% or less in the case of Mn, and 250% or less in the case of Si. In another embodiment of the present disclosure, the difference of converted concentration of Mn may be 90% or more or 100% or more, and the difference of converted concentration of Si may be 60% or more or 70% or more.

Hereinafter, the GDS analysis method performed in the present disclosure is described in detail.

For the GDS concentration analysis, a hot-dip galvanized steel sheet is cut to a size of 30 to 50 mm in length, and dipped in a 5 to 10 wt% of hydrochloric acid solution at room temperature of 20 to 25°C to remove a galvanized layer. To prevent damage to the surface of base steel sheet during a dissolution process of the galvanized layer, an acid solution was removed within 10 seconds when bubble generation due to a reaction between the galvanized layer and the acid solution is stopped, and the base steel sheet was washed using pure water and dried. If it is a steel sheet for plating that has not yet been hot-dip galvanized, it may be analyzed without removing the galvanized layer.

The GDS concentration profile measures a concentration of all elements contained in the steel sheet at intervals of 1 to 5 nm in a thickness direction of the steel sheet. Irregular noise may be included in the measured GDS profile, an average concentration profile was obtained by applying a Gaussian filter with a cutoff value of 100 nm to the measured concentration profile to derive the maximum and minimum points of the Mn and Si concentrations, and the concentration values and depths of the maximum and minimum points of the concentrations were respectively obtained from the noise-removed profile. In addition, it should be noted that the maximum and minimum points mentioned in the present disclosure were calculated as maximum and minimum points only when the difference between the maximum point and the minimum point in the depth direction was 10 nm or more.

The steel sheet for plating targeted in the present disclosure may include a base steel sheet and an Fe plating layer formed on the base steel sheet. The composition of the base steel sheet is not particularly limited.

However, if the steel sheet is a high-strength steel sheet having a composition which easily forms oxides on the surface, containing 1.0 to 8.0 wt% of Mn and 0.05 to 3.0 wt% of Si, the plating property may be advantageously improved by the present disclosure. An upper limit of the concentration of Mn of the base steel sheet is not particularly limited, but considering the composition commonly used, the upper limit may be limited to 8 wt%. In addition, a lower limit of the concentration of Mn is not particularly limited, if a composition contains less than 1.0 wt% of Mn, the surface quality of a hot-dip galvanized steel sheet is attractive, even if a Fe plating layer is not formed, so there is no need to perform Fe electroplating thereon. An upper limit of a Si concentration is not particularly limited, but considering the composition commonly used, the upper limit may be limited to 3.0 wt% or less, and if the Si concentration is less than 0.05 wt%, the quality of the hot-dip galvanizing is good even if the Fe electroplating and internal annealing oxidation are not performed simultaneously, so there is no need to perform the method of the present disclosure.

Since Mn and Si are elements affecting the plating property, the concentrations of Mn and Si may be limited as described above, but in the present disclosure, contents of remaining elements of the base steel sheet are not particularly limited.

However, considering that non-plating and deterioration in plating adhesion may occur severely in the high-strength steel sheet containing a large amount of alloying elements, in an embodiment of the present disclosure, the base steel sheet may include, by weight%: 1.0 to 8.0% of Mn, 0.05 to 3.0% of S, 0.06 to 0.4% of C (preferably 0.07 to 0.4%, more preferably 0.08 to 0.4 %), 0.005 to 3.0% of Al, 0.04% or less of P, 0.015% or less of S, 0.01 % or less of N, 1.5% or less of Cr, 0.005% or less of B, with a balance of Fe and inevitable impurities. P, S, and N are impurities, which are advantageous when not added, and Cr and B are optional elements and do not need to be added, so lower limits thereof are not set.

Hereinafter, a steel composition of the present disclosure will be described in more detail. Hereinafter, unless otherwise specifically indicated, a content of each element is based on weight.

### Manganese (Mn): 1.0 to 8.0%

Manganese (Mn) is an element added to secure strength. When the content of Mn is less than 1.0%, it is difficult to secure the strength, while when the content of Mn exceeds 8.0%, a bainite transformation speed is slowed, so that an excessive amount of fresh martensite is formed and it is difficult to obtain high hole expandability. In addition, a band structure is formed due to segregation of Mn, impairing material uniformity and formability of the material. Therefore, it is preferable that the content of Mn is in the range of 1.0 to 8.0%. A lower limit of the content of Mn is more preferably 1.5%.

### Silicon (Si): 0.05 to 3.0%

Silicon (Si) is a useful element for increasing the strength of a steel sheet through solid solution strengthening and precipitation hardening. Since Si suppresses the formation of cementite, Si has the effect of promoting C concentration in austenite, and is an essential element for increasing the strength and elongation of steel by generating retained austenite after annealing. If a content of Si exceeds 3.0%, physical properties of a weld zone deteriorate due to LME cracking, and surface properties and plating properties of a steel material deteriorate. Therefore, it is preferable that the content of Si is in the range of 0.05 to 3.0%.

### Carbon (C): 0.06 to 0.4%

Carbon (C) is an element for securing the strength of a steel material through solid solution strengthening and precipitation strengthening, and is an element effective for securing high elongation by stabilizing retained austenite. If the content of C is less than 0.05%, a tensile strength of 1500 MPa may not be obtained, and if the content of C exceeds 0.4%, a steel sheet may not be manufactured by cold rolling. Therefore, the appropriate content of C is in the range of 0.06 to 0.4%. Meanwhile, it is more preferable that the content of C is in the range of 0.2% or more and 0.4% or less.

### Aluminum (Al): 0.005 to 3.0%

Aluminum (Al) is an element which has a deoxidizing effect on molten steel, and similarly to Si, and acts to improve the stability of austenite, and is effective in increasing elongation.

If the content of Al is less than 0.005%, the deoxidation of a steel material is not sufficient, thereby impairing cleanliness of the steel material. On the other hand, if the content of Al is too high, a transformation temperature increases significantly and a fraction of ferrite increases, making it impossible to implement high strength. Therefore, the content of Al is set to 3.0% or less. In another embodiment of the present disclosure, the content of Al may be limited to 2.0% or less, or 1.0% or less.

### Phosphorous (P): 0.04% or less

Phosphorous (P) is contained as an impurity and segregates at grain boundaries, thereby lowering toughness. Therefore, it is preferable that a content of P is controlled to be as low as possible. In addition, since the toughness of the steel material deteriorates when P is excessively added, in the present disclosure, it is preferable that an upper limit of the content of P is limited to 0.04%, to prevent this. In the present disclosure, since it is advantageous that P is not added, there is no need to set a lower limit of the content of P. However, when considering a common manufacturing method, the lower limit of the content of P may be set to 0.002%. In an embodiment of the present disclosure, the upper limit of the content of P may be set to 0.0173%.

### Sulfur (S): 0.01% or less

Sulfur (S)is contained as an impurity in steel, like in the case of P. Sulfur (S) combines with Manganese (Mn) to form inclusions, which may reduce hole expandability, and may also reduce weldability and hot rolling properties, so it is advantageous to control a content of S as low as possible. Therefore, the content of S may be limited to 0.01% or less, considering the case in which S is inevitably included. In the present disclosure, it is advantageous that S is not added, so there is no need to specifically set a lower limit of the content of S. However, considering a common manufacturing process, a lower limit of the content of S may be set to 0.0009%. In another embodiment of the present disclosure, an upper limit of the content of S may be set to 0.0021%.

### Nitrogen (N): 0.01% or less

In the present disclosure, nitrogen (N) is an impurity and is included in a steel material, and it is advantageous to control a content of N as low as possible. Therefore, in an embodiment of the present disclosure, the content of N may be limited to 0.01% or less, and a lower limit of the content of N is not specifically set. However, considering the case in which N is inevitably included, 0% can be excluded (i.e., more than 0%). In another embodiment of the present disclosure, the lower limit of the content of N may be set to be 0.0005%. In addition, in another embodiment of the present disclosure, the upper limit of the content of N may be set to 0.007%, or may be set to 0.006% or 0.0052%.

### Chromium (Cr): 1.5% or less

Chromium (Cr) is an element effective for improving strength. Cr suppresses the formation of carbides and makes it easier to secure retained austenite. On the other hand, if the content of Cr exceeds 1.5%, local corrosion resistance deteriorates and surface oxides may be formed, thereby impairing phosphate treatment properties. Therefore, it is preferable that the content of Cr is in the range of 1.5% or less. More preferably, the content of Cr is 1.0% or less.

### Boron (B): 0.005% or less

Boron (B) strengthens grain boundaries and suppresses ferrite transformation during cooling after annealing. To obtain such an effect an addition amount of B may be 0.0001% or more. When the addition amount of B is excessive, hot rolling properties may deteriorate, and B may be excessively accumulated on the surface, thereby impairing plating properties. Therefore, it is preferable that the content of B is in the range of 0.005% or less.

In the present disclosure, high strength is used to mean not only a case in which high strength may be obtained after annealing, but also a case in which high strength may be obtained through a heat treatment in a subsequent process. In addition, in the present disclosure, high strength may mean a tensile strength of 490 MPa or more, but the present disclosure is not limited thereto. In addition to the above-described elements, the base steel sheet may further include elements such as Ti, Mo, and Nb in a total amount of 1.0% or less. The base steel sheet is not particularly limited, but in an embodiment of the present disclosure, a cold-rolled steel sheet or a hot-rolled steel sheet may be used as the base steel sheet. In addition, although not necessarily limited thereto, in an embodiment, martensitic steel or TRIP steel may be used as the cold-rolled steel sheet or hot-rolled steel sheet.

In an embodiment of the present disclosure, the cold-rolled steel sheet or the hot-rolled steel sheet may have a microstructure including 30 to 70 vol% of tempered martensite, 5 to 45 vol% of bainite, 10 to 40 vol% of retained austenite, and 20 vol% or less of a ferrite phase. The microstructure may include 30 vol% or more of tempered martensite, so that high strength may be obtained and hole expandability may be secured. In addition, when 10 vol% or more of retained austenite is included, a transformation-induced plasticity phenomenon due to retained austenite may be used, which can greatly improve elongation. Bainite is included to form retained austenite and secure strength, and should be included in an amount of 5% by volume or more, and ferrite may be included as needed to improve mechanical properties by increasing elongation and refining old austenite grains, as well as to stabilize retained austenite by increasing the C concentration in the retained austenite. However, when a ratio of the ferrite phase exceeds 20% by volume, a difference in hardness between the phases with the tempered martensite, which is a base structure, may increase, resulting in poor bendability and hole expandability. Therefore, the ratio may be limited to 20% by volume or less. In some cases, the ferrite phase may be included in an amount of 3% by volume or more. when a ratio of each phase is too high, a ratio of the other phases may be limited to a range below the appropriate range, so the upper limit may be limited as described above.

The hot-rolled steel sheet or cold-rolled steel sheet having the microstructure described above is not necessarily limited thereto, but can be manufactured by the following processes.

The hot-rolled steel sheet may be manufactured by a process of including operations of: heating a steel slab including by weight, 1.0 to 8.0% of Mn, 0.05 to 3.0% of Si, 0.06 to 0.4% of C (preferably 0.07 to 0.4%, more preferably, 0.08 to 0.4%), 0.005 to 3.0% of Al, 0.04% or less of P, 0.015% or less of S, 0.0% or less of N, 1.5% or less of Cr, 0.005% or less of B, with a balance of Fe and inevitable impurities; hot rolling the heated steel slab to obtain a steel sheet; and coiling the hot-rolled steel sheet. In addition, the cold-rolled steel sheet may be manufactured by a process including operations of: cold rolling the hot-rolled steel sheet; maintaining the cold-rolled steel sheet in a soaking section for 50 to 500 seconds; cooling the maintained steel sheet to a temperature between 100 to 300°C at a cooling rate of 1°C/s or more (which may be limited to 3000°C/s or less, 2000°C/s or less, or 1000°C/s or less, depending on the case); and heating the cooled steel sheet to a temperature between 300 to 600°C and maintaining the same for 50 seconds or longer (which may be limited to 3000 seconds or lower or 2000 seconds or lower, depending on the case).

In an aspect of the present disclosure, a hot-dip galvanized steel sheet including the steel sheet for plating may be provided, and the hot-dip galvanized steel sheet may include a steel sheet for plating and a hot-dip galvanized layer formed on a surface of the steel sheet for plating. In this case, any commercially available hot-dip galvanized steel sheet can be used, and there are no specific restrictions on the type thereof.

Next, one exemplary embodiment of a method for manufacturing a steel sheet for plating and a hot-dip galvanized steel sheet having the advantageous effects described above is described. According to an embodiment of the present disclosure, a steel sheet for plating may be manufactured by a process including preparing a base steel sheet; performing electroplating on the base steel sheet to form an Fe plating layer including 5 to 50 wt% of oxygen; and obtaining a steel sheet for plating by annealing the base steel sheet on which the Fe plating layer is formed.

A 1.2 GPa grade cold-rolled steel sheet (martensitic steel) including 2.3% of Mn, 0.9% of Si, and other alloying elements was annealed at a temperature of 800°C for 53 seconds in an atmosphere of N₂-5% H₂, dew point of +5°C, and cooled and then observed using a transmission electron microscope. The atmosphere was maintained the same throughout the entire heating time, and the dew point temperature was maintained at -40°C during cooling to prevent Fe from being oxidized. A phenomenon was observed by dividing it into a case in which Fe electroplating containing 6.6 wt% of oxygen was performed to obtain an iron adhesion amount of 2.02 g/m² before annealing and a case in which Fe electroplating was not performed.

As a result of the observation, it was found that the steel sheet annealed at a dew point of +5°C without Fe plating had fine Mn and Si oxides observed on the surface layer, and thick grain boundary oxides were formed inside the base steel sheet. This is because grain boundary oxides begin to form from a stage in which a cold-rolled structure is removed and is recrystallized into fine grains during a temperature-increase process, and as annealing temperature increases and an annealing time increases, oxygen flows into the coarsened grains of the base steel sheet, thereby generating oxides centered on the grain boundaries. This form ultimately causes the concentrations of Mn and Si elements in the GDS profile to change gradually, so that maximum and minimum points do not appear properly, or even if the maximum and minimum points do appear, the difference in converted concentrations therebetween does not satisfy the range limited by the present disclosure.

However, when the Fe plating layer containing 5 to 50 wt% of oxygen is plated to an iron adhesion amount of 1.99g/m² and then annealed, almost no oxides are generated in a region of the Fe plating layer, and oxide particles are generated at the interface between the Fe plating layer and base steel sheet and inside the base steel sheet, and the oxides acts as nuclei of internal oxides to grow linear oxides in a direction perpendicular to the surface of the steel sheet. However, a depth of the formation of internal oxides is deeper when the Fe plating layer is not formed than when the Fe plating layer is formed. In such cases, the Fe plating layer (surface layer portion) contains small amounts of Mn and Si elements, and not only a maximum point may be shown at the interface, but also a depletion layer in which the contents of Mn and Si in the region deeper than the maximum value are greatly reduced may be shown.

Meanwhile, if annealing is performed in a high dew point atmosphere without Fe plating, oxides are generated at the grain boundaries of the fine recrystallized structure from the surface of the base steel sheet, resulting in suppressing crystal growth, and thus irregular fine grains surrounded by the fine oxides are generated, while after forming a plating layer with a high oxygen content, if annealing is performed at a high dew point of -15°C to +30°C, the Fe plating layer does not include oxidizing alloying elements such as Mn, Si, and the like, so oxides are not formed at the grain boundaries of the plating layer, and oxides are formed at the interface between the Fe plating layer and the base steel sheet. Therefore, it has the characteristic in which a uniform thickness of the Fe plating layer and grains inside the base steel sheet are distinguishable. However, since a boundary between the Fe plating layer and the base steel sheet may not be distinct in some cases depending on the dew point in the annealing furnace, the elongation of the base steel sheet, the steel composition, or the like, even if the dew point in the annealing furnace, after Fe electroplating is performed, is controlled to -15°C to +30°C, this characteristic is not necessarily achieved.

Unlike the oxidation reduction method, in the internal oxidation method at annealing, since a layered oxide layer is not formed, excellent properties in improving the plating adhesion during hot-dip galvanizing an ultra-high strength steel sheet containing a large amount of alloying elements such as Mn, Si, and the like, are illustrated, but since water vapor inside the annealing furnace inevitably oxidizes the surface of the steel sheet first, and then oxygen penetrates thereinto, it is impossible to fundamentally remove the surface oxide.

To solve the above-described problem, when an Fe plating layer containing a large amount of oxygen is formed and then annealed in a high dew point atmosphere, the inventors of the present disclosure have found that oxygen contained in the Fe plating layer can effectively suppress the diffusion to the surface by internally oxidizing alloying elements such as Mn and Si in the base steel sheet without forming surface oxides of alloying elements such as Mn and Si on the surface of the Fe plating layer from water vapor, through many experiments. Since oxygen introduced into the steel due to the high dew point in the annealing furnace causes additional internal oxidation of the alloying elements, almost no surface oxides of the alloying elements are formed on the steel surface, which dramatically improves the surface quality and plating adhesion of the hot-dip galvanized steel sheet. When a galvannealed steel sheet, an alloying reaction may be promoted to obtain a uniform galvannealed steel sheet without surface defects.

More specifically, when an Fe plating layer containing 5 to 50wt% of oxygen on the cold-rolled steel sheet (base steel sheet) is formed, and the temperature of the Fe plating layer is increased to a temperature within a range of 600°C to 950°C so that the mechanical properties of the steel sheet may be secured in an annealing furnace controlled to a temperature of -15°C to +30°C and then cooled and hot-dip plating is performed, a hot-dip galvanized steel sheet in which non-plating suppresses and plating adhesion is excellent may be obtained.

In an embodiment of the present disclosure, the Fe plating layer may be formed through a continuous plating process, and the Fe plating amount herein may be 0.5 to 3.0 g/m² based on the Fe adhesion amount. If the Fe plating amount is less than 0.5 g/m², a diffusion suppression effect of alloying elements by the Fe plating layer may be insufficient in a common continuous annealing process. In addition, even if the Fe plating amount exceeds 3.0 g/m², the diffusion suppression effect of alloying elements may be further increased, but to secure a high plating amount, a plurality of plating cells should be operated, and when an insoluble anode is used, the electroplating solution becomes rapidly acidic, which reduces the plating efficiency and causes sludge to be generated, which may be uneconomical. In another embodiment of the present disclosure, the Fe plating amount may be 1.0 to 2.0 g/m². When an Fe plating layer is formed and then internal oxidation is performed, internal oxides may be formed at an interface between the Fe plating layer and the base steel sheet or directly below the interface, so the maximum points of the concentrations of Mn and Si exist in a region in the range of 0.05 to 1.0 µm. The Fe plating amount of 0.5 to 3.0 g/m² of the present disclosure may correspond to a thickness of 0.05 to 0.4 µm after annealing.

In addition, the Fe plating layer having the above-described high oxygen concentration may have maximum and minimum points in the GDS concentration profile of Mn and Si elements formed inside the steel sheet for plating by controlling the temperature, dew point temperature, and atmosphere in a subsequent annealing process, and is configured so that the converted concentration at the maximum point and the converted concentration at the minimum point may satisfy the numerical range limited in an embodiment of the present disclosure. In consideration thereof, in an embodiment of the present disclosure, the concentration of oxygen in the Fe plating layer may be 5 to 50 wt%, and in another embodiment, the concentration of oxygen in the Fe plating layer may be 10 to 40 wt%. In order to obtain a surface oxide suppression effect, the amount of oxygen in the Fe plating layer should be sufficient. Even if the concentration of oxygen in the Fe plating layer is less than 5 wt%, the surface oxide suppression effect may be obtained by increasing the Fe plating amount. However, in order to obtain such an effect, plating should be performed exceeding 3.0 g/m², which may cause various problems as described above. In addition, since it is difficult to sequentially form a maximum point and a minimum point in the GDS profile of Mn and Si when the content of oxygen is less than 5 wt%, in an embodiment of the present disclosure, the content of oxygen in the Fe plating layer is controlled to be 5 wt% or more. Meanwhile, the surface oxide suppression effect during annealing can be further increased as the concentration of oxygen in the Fe plating layer increases, but since it is difficult to obtain a plating layer exceeding 50 wt% using a common electroplating method, an upper limit thereof may be limited to 50 wt%. In another embodiment of the present disclosure, the concentration of oxygen in the Fe plating layer may be limited to 10 to 40%.

In an embodiment of the present disclosure, an annealing temperature may be 600°C to 950°C based on a temperature of the steel sheet in a soaking section. If the annealing temperature is too low, since a structure of the cold-rolled steel sheet is not properly be recovered or not recrystallized, it is difficult to secure mechanical properties such as strength, elongation, and the like, of the steel sheet, and if the annealing temperature is higher than 950°C, alloying elements in the steel may rapidly diffuse to the surface, resulting in poor quality of hot-dip galvanizing, and the operation is performed unnecessarily at high temperatures, which may be uneconomical.

Meanwhile, in an embodiment of the present disclosure, a dew point temperature inside the annealing furnace may be in the range of -15°C to +30°C. if the dew point temperature is lower than -15°C, an amount of oxygen flowing into the steel decreases, so that only surface oxidation increases and internal oxidation does not occur, so a large amount of oxides exist on the surface, thereby deteriorating the quality of hot-dip galvanizing. In addition, if the dew point temperature is higher than +30°C, the effect of suppressing surface oxidation by increasing internal oxidation and suppressing the diffusion of alloying elements is further increased, but an amount of water vapor supplied increases rapidly, so a humidifying equipment capacity should be unnecessarily increased. The dew point temperature may be managed in the above-described range of 600 to 950°C, and may be managed under more relaxed conditions in a lower temperature range. In another embodiment of the present disclosure, the dew point temperature may be limited to -10 to +20°C.

In addition, in order to prevent oxidation of the base steel sheet and Fe plating layer during annealing, a concentration of hydrogen in the atmosphere gas during annealing may be set to 1% or more by volume%. If the concentration of hydrogen is less than 1%, a trace amount of oxygen, inevitably included in H₂ and N₂ gases cannot be effectively oxidized and removed, which increases the oxygen partial pressure and can cause surface oxidation of the base steel sheet. Meanwhile, if the concentration of hydrogen exceeds 70%, there may be a risk of explosion in the event of gas leakage and the cost of high-hydrogen work increases, so the hydrogen concentration may be set to 70% or less. Except for the impurity gases which are inevitably included other than the hydrogen (H₂), it can be substantially nitrogen (N₂).

According to an embodiment of the present disclosure, a holding time after reaching a target temperature during annealing may be limited to 5 to 120 seconds. In order to sufficiently transfer heat to the inside of the base steel sheet during annealing to obtain uniform mechanical properties in the thickness direction, the holding time is required to be maintained at the target temperature during annealing for 5 seconds or longer. Meanwhile, if the holding time during annealing at high temperatures becomes excessively long, the diffusion of alloying interfering elements through the Fe plating layer increases, which increases the amount of surface oxides generated, and as a result, the quality of hot-dip galvanizing deteriorates, so the holding time may be limited to 120 seconds or less.

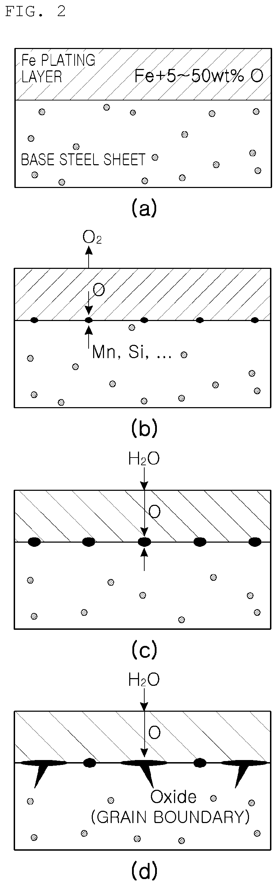

Hereinafter, based on the above-described contents, the effect of suppressing surface diffusion of Mn and Si in a high dew point atmosphere of a cold-rolled steel sheet with an Fe plating layer containing a large amount of oxygen will be described in more detail with reference to FIG. 2.

FIG. 2 schematically illustrates a phenomenon which occurs inside a steel sheet as a temperature of the steel sheet increases according to the conditions of the present disclosure. FIG. 2 (a) illustrates a schematic cross-sectional diagram of a base steel sheet on which an Fe plating layer containing a large amount of oxygen is formed. The base steel sheet includes alloying elements such as Mn, Si, and the like, and the Fe plating layer includes 5 to 50 wt% of oxygen and impurities which are inevitably incorporated during electroplating, and the remainder is comprised of Fe.

FIG. 2 (b) illustrates a state in which a cold-rolled steel sheet, plated with Fe, is heated to about 300 to 500°C in a nitrogen atmosphere containing 1 to 70% H₂. A surface of the Fe plating layer containing a large amount of oxygen is gradually reduced and the oxygen is removed, but Mn, Si, and the like, diffused from a base steel sheet combine with the oxygen in the Fe plating layer at an interface between the Fe plating layer and the base steel sheet to form internal oxides, so diffusion thereof to the surface is suppressed. In addition, as the temperature increases, Mn and Si diffused from inside the base steel sheet accumulate, causing the internal oxide at the interface to grow gradually. Even though a dew point inside an annealing furnace varies widely from -90°C to +30°C in a low-temperature region of the temperature-increase operation, since a large amount of oxygen exists inside the Fe plating layer, and a rate at which the Fe plating layer is reduced and oxygen is released is faster than a rate at which oxygen dissociated by water vapor diffuses into the steel due to the low temperature, there is no significant effect even if the dew point inside the annealing furnace changes in the low-temperature region. Therefore, dew point control is not a very important factor in the present operation.

However, the amount of oxygen inside the Fe plating layer plays an important role, and if a large amount of fine internal oxides are generated at the interface between the Fe plating layer and the base steel sheet and inside the base steel sheet at a low temperature stage, the internal oxides act as oxide nuclei that allow the alloying elements inside the base steel sheet to be continuously oxidized internally. In order for the oxide nuclei to be formed, the concentrations of oxygen and alloying elements should be high at the same time. If the Fe plating layer contains a sufficient amount of oxygen, a large amount of oxide nuclei are formed near the interface between the Fe plating layer with a high oxygen concentration and the base steel sheet with a high alloying element concentration. However, if the Fe plating layer includes little oxygen, the alloying elements included in the base steel sheet pass through the Fe plating layer and form oxides on the surface. If the temperature is then increased, oxygen in the Fe plating layer is further depleted, and the diffusion of the alloying elements within the base steel sheet is further aggravated, so the formation of surface oxides increases.

FIG. 2 (c) illustrates a schematic cross-section of the base steel sheet when the temperature is increased to 500 to 700°C in the same reducing atmosphere. During the temperature-increase process, it is preferable that a dew point inside an annealing furnace is controlled to -15°C to +30°C. As the temperature increases, the Fe plating layer is sufficiently reduced and a concentration of oxygen decreases, so a rate at which oxygen is released is slowed down, while a rate at which water vapor within the annealing furnace dissociates and diffuses into the steel increases significantly. Therefore, if the dew point increases from a region within a range of 500°C to 700°C, which is lower than the temperature at which the Fe plating layer is completely reduced, it can effectively suppress the diffusion of Mn and Si inside the steel through the Fe plating layer to the surface.

FIG. 2 (d) illustrates a cross-sectional schematic diagram of a steel sheet after the steel sheet is maintained at high temperatures within a range of 600°C to 950°C while controlling the dew point to -15°C to +30°C. Since Mn and Si continuously diffuse inside the base steel sheet, and oxygen supplied from water vapor rapidly penetrates and is supplied to the surface of the steel sheet surface, particle-shaped Mn and Si oxides generated by reaction with oxygen in the Fe plating layer at an interface between the Fe plating layer and the base steel sheet in the low-temperature range act as nuclei on which the oxides can grow, the internal oxides grow concentrated at the interface between the Fe plating layer and the base steel sheet. In addition, since a diffusion rate of oxygen is faster than that of Mn and Si having larger atomic sizes, internal oxides are deeply formed not only through grain boundaries but also within the grains.

As described above, the control conditions by temperature have been explained, but the most critical operation in the annealing process is an operation of maintaining the temperature of the steel sheet at a temperature within a range of 600 to 950°C. Only controlling the dew point to the atmosphere in this temperature range can effectively control the distribution of oxides inside the steel sheet for plating. Even if such dew point control is performed in all processes prior to the holding operation, which is not particularly problematic. In addition, it should be noted that the above-described process is merely an example of an embodiment of the present disclosure, and that the reaction mechanism of the present disclosure is not always interpreted to be bound by the above-described description.

After the annealing operation, the annealed steel sheet may be cooled. Since the cooling conditions in the cooling operation after the annealing operation do not significantly affect the surface quality of a final product, that is, the plating quality, there is no need to specifically limit the cooling conditions in the present disclosure. However, in order to prevent oxidation of iron elements during the cooling process, an atmosphere which is at least reducing for iron may be applied.

According to an embodiment of the present disclosure, a hot-dip galvanized layer may be formed by hot-dip galvanizing the steel sheet for plating obtained by the above-described process. The hot-dip galvanizing method in the present disclosure is not particularly limited.

In addition, in the present disclosure, any base steel sheet having the above-described alloy composition may be applied without limitation as a base steel sheet of the steel sheet for plating or hot-dip galvanized steel sheet according to the present disclosure, so the method for manufacturing the base steel sheet may not be specifically limited.

In an embodiment of the present disclosure, the Fe plating layer may be formed on a surface of the base steel sheet through electroplating, and an oxygen concentration of the Fe plating layer formed by appropriately controlling conditions of the electroplating solution and plating conditions, may be controlled.

That is, in order to form an Fe plating layer in the present disclosure, an electroplating solution may be used, the electroplating solution including: iron ions including ferrous ions and ferric ions; a complexing agent; and inevitable impurities, wherein a concentration of the ferric ions among the iron ions is 5 to 60% by weight.

According to an embodiment of the present disclosure, the electroplating solution includes ferrous ions and ferric ions. In order to obtain high plating efficiency, it may be advantageous that the electroplating solution includes only ferrous ions. However, when only ferrous ions are included, the solution deteriorates and the plating efficiency rapidly decreases, which may cause a deviation in quality in a continuous electroplating process, the electroplating solution may further include the ferric ions. In this case, the concentration of the ferric ions is preferably 5 to 60 wt%, and more preferably 5 to 40 wt% of the total sum of ferrous and ferric ions. When the concentration is less than 5%, a rate at which ferric iron is reduced to ferrous iron at a cathode is less than a rate at which ferrous iron is oxidized to ferric iron at an anode, so the concentration of ferric iron rises rapidly, and pH drops rapidly and plating efficiency continues to deteriorate. On the other hand, when the concentration of ferric ions exceeds 60%, a reaction amount in which ferric iron is reduced to ferrous iron at the cathode is greatly increased, compared to a reaction amount in which ferrous iron is reduced and precipitated as metallic steel, so the plating efficiency decreases significantly and the plating quality deteriorates. Therefore, considering the equipment and process characteristics such as a plating amount, working current density, a solution supply amount, an amount of solution lost by being deposited on a strip, a rate of a change in concentration due to evaporation, and the like, it is preferable that a concentration of ferric ions among the iron ions is 5 to 60 wt%.

The concentration of iron ions is preferably 1 to 80 g per 1 L of the electroplating solution, and more preferably 10 to 50 g per 1 L. When the concentration of iron ions is less than 1g/L, there is a problem that plating efficiency and plating quality deteriorate rapidly. On the other hand, when the concentration of iron ions exceeds 80g/L, solubility may be exceeded and precipitation may occur, and loss of a raw material due to the loss of the solution during the continuous plating process may occur, which may be uneconomical.

The electroplating solution of the present disclosure includes a complexing agent, and in order to maintain high plating efficiency without generating sludge while containing a large amount of ferric iron, it is preferable to use amino acid or an amino acid polymer as a complexing agent.

An amino acid refers to an organic molecule in which a carboxyl group (-COOH) and an amine group (-NH₂) are combined, and an amino acid polymer refers to an organic molecule formed by polymerizing two or more amino acids, and an amino acid polymer has properties of complexing agents, similar to that of an amino acid. Therefore, in the following description, an amino acid and an amino acid polymer are collectively referred to as an amino acid.

When an amino acid is dissolved in neutral water, amine combines with hydrogen ions to acquire a positive charge, and a carboxyl group dissociates from the hydrogen ion to acquire a negative charge, so the amino acid molecule maintains a neutral charge. Meanwhile, when the solution becomes acidic, the carboxyl group recombines with hydrogen ions, making the charge neutral, and the amine has a positive charge, so the amino acid molecule forms a cation. In other words, an amino acid forms a neutral charge or cation in a slightly acidic aqueous solution.

When an amino acid is added to an acidic electrolyte containing iron ions, the amino acid is complexed with ferrous and ferric ions, and iron ions complexed with the amino acid remain in a cationic state even in the complexed state. Therefore, it exhibits electrically opposite characteristics to the common complexing agent having a plurality of carboxyl groups, having a negative charge in a weakly acidic aqueous solution.

In addition, compared to the complexing agent including a plurality of carboxyl groups such as citric acid, EDTA, and the like, an amino acid forms fewer bonds with iron ions and has a weaker bonding force, but the bonding force with ferric ions which generates sludge is sufficiently strong, so precipitation due to ferric ions may be prevented. In addition, since the ferric ions may maintain cations even when the ferric ions are complexed, the ferric ions can be easily transferred to a cathode and reduced to ferrous ions to participate in a plating reaction, while the movement thereof to an anode is suppressed, so a production rate of the ferric ions is slowed down, so that the concentration of ferric ions is maintained at a constant level even when continuous plating is performed for a long period time, the plating efficiency is maintained at a constant level, and there is no need to replace an electrolyte.

Meanwhile, in a continuous electroplating process, when the iron ions in a solution are exhausted by plating, the solution becomes acidic, and even when the same amount of iron ions is precipitated, a change in pH in a solution containing both ferric ions and ferrous ions is reduced compared to a solution containing only ferrous ions. When pH increases, some ferric ions combine with hydroxide ions, and when pH decreases, hydroxide ions are separated and neutralized, so the solution containing ferric ions acts as a pH buffer by slowing down the change in pH without a separate pH buffer, so that the electroplating efficiency may be maintained at a constant level in a continuous electroplating process.

Therefore, by using an amino acid as a complexing agent, sludge may be prevented, and not only ferrous ions but also ferric ions may be used as a plating material, and when ferrous ions and ferric ions are mixed and used, the change in pH of the solution may be slowed down, and the accumulation of ferric ions may be easily prevented, so that the electroplating efficiency and plating quality may be maintained to be constant in a continuous electroplating process.

Meanwhile, the complexing agent is preferably added in an amount so that a molar concentration ratio between the iron ion and the complexing agent is 1:0.05 to 2.0, and more preferably 1:0.5 to 1.0. When the molar concentration ratio is less than 0.05, it is impossible to suppress ferric ions excessively contained therein from combining with hydroxide ions or oxygen to form sludge, and even when ferric ions are not included, the plating efficiency is greatly reduced, and furthermore, burning is induced, which deteriorates plating quality. On the other hand, even when the molar concentration ratio exceeds 2.0, the sludge suppression effect and plating quality are maintained, but the plating efficiency decreases due to an increased overvoltage, and since an excessive amount of amino acid is unnecessarily included, which is relatively expensive compared to a raw material containing iron ions such as iron sulfate, or the like, the cost of raw materials increases, which may be uneconomical.

The complexing agent is preferably at least one selected from amino acids or amino acid polymers. For example, the complexing agent may be at least one selected from alanine, glycine, serine, threonine, arginine, glutamine, glutamic acid, and glycylglycine.

When the amino acid is used as a complexing agent, and electroplating is performed at a current density of 3 to 120A/dm² while maintaining a temperature of a solution at 80°C or lower and pH at 2.0 to 5.0, an Fe plating layer with high plating efficiency and high oxygen concentration may be obtained.

A temperature of the Fe electroplating solution does not significantly affect the quality of the Fe plating layer, but when the temperature of the Fe electroplating layer exceeds 80°C, evaporation of the solution becomes severe and the concentration of the solution continuously changes, making uniform electroplating difficult.

If the pH of the Fe electroplating solution is less than 2.0, the electroplating efficiency decreases, which is not suitable for a continuous plating process. If the pH of the Fe electroplating solution exceeds 5.0, the plating efficiency increases, but sludge in which iron hydroxide precipitates is generated during continuous electroplating, causing problems with pipe clogging and contamination of rolls and equipment.

If the current density is less than 3A/dm², a plating overvoltage of the cathode decreases and the Fe electroplating efficiency decreases, so it is not suitable for a continuous plating process. If the current density exceeds 120A/dm², burning occurs on the plating surface, causing the electroplating layer to become uneven and the Fe plating layer to easily fall off.

As described above, in the present disclosure, 5 to 50 wt% of oxygen is preferably contained in the Fe plating layer. The causes in which oxygen is incorporated into the Fe plating layer are as follows. In the process in which iron is precipitated on the surface of the steel sheet to which a cathode is applied, and at the same time, as hydrogen ions are reduced to hydrogen gas, the pH increases. Therefore, both ferrous and ferric ions are temporarily combined with OH⁻ ions and can be incorporated together when the Fe plating layer is formed. If an anionic complexing agent such as acetic acid, lactic acid, citric acid, or EDTA is used, the iron ions combined with OH⁻ ions in the complexing agent have an average negative charge, and when a cathode is applied for electroplating, repulsion electrically occurs, which suppresses the incorporation into the Fe plating layer. On the other hand, amino acids are electrically neutral at pH 2.0 to 5.0, and have cations in strong acids below pH 2.0. Even if 1 to 2 OH⁻s are combined to the iron ion combined with the amino acid, since the amino acids have cations, electrical attraction with the cathode performing electroplating occurs, which causes a large amount of oxygen incorporated therein. Therefore, if an amino acid is used as a complexing agent, so that a molar concentration ratio between iron ions and amino acids is 1: 0.05 to 1:2.0, and Fe electroplating is performed while maintaining pH at 2.0 to 5.0, an Fe plating layer containing 5 to 50 wt% oxygen can be obtained while having high plating efficiency and suppressing sludge generation.

In order to secure the quality of hot-dip galvanizing of the steel sheet containing Mn and Si, it is preferable that a plating amount of the Fe plating layer is 0.5 to 3.0 g/m² based on the iron concentration. An upper limit of the Fe plating amount is not particularly limited, but if the Fe plating amount exceeds 3.0 g/m² in a continuous plating process, a plurality of plating cells are required or the production rate thereof is reduced, which may be uneconomical. In addition, if an Fe electroplating amount is large, the Fe electroplating solution is rapidly transformed in a continuous process, causing the pH to drop and the plating efficiency to decrease significantly, making the management of solution difficult. On the other hand, when the Fe electroplating amount is less than 0.5g/m², since oxygen contained in the Fe plating layer is quickly reduced and removed, Mn and Si diffuse from the base steel sheet so that the formation of surface oxides may not be effectively suppressed, so that there is a problem in that the quality of hot-dip plating deteriorates. The Fe plating amount is the iron concentration contained in the plating layer, and when the Fe plating layer is completely reduced during annealing, it has a thickness of about 0.05 to 0.4 µm.

## Claims

1. A steel sheet comprising, by weight%:
1.0 to 8.0% of Mn, 0.05 to 3% of Si, 0.06 to 0.4% of C, 0.005 to 3.0% of Al, 0.04% or less of P, 0.015% or less of S, 0.01% or less of N, 1.5% or less of Cr, 0.005% or less of B, with a balance of Fe and inevitable impurities,
wherein each of a GDS profile of an Mn element and a GDS profile of an Si element, observed from a surface thereof in a depth direction, sequentially includes a maximum point and a minimum point,
a difference between a value obtained by dividing a Mn concentration at the maximum point in the GDS profile of the Mn element by a Mn concentration of a base material, and a value obtained by dividing a Mn concentration at the minimum point in the GDS profile of the Mn element by the Mn concentration of the base material (a difference of converted concentration of Mn) is 80% or more,
a difference between a value obtained by dividing a Si concentration at the maximum point in the GDS profile of the Si element by a Si concentration of a base material, and a value obtained by dividing a Si concentration at the minimum point in the GDS profile of the Si element by the Si concentration of the base material (a difference of converted concentration of Si) is 50% or more,
wherein when no minimum points appear within 5 µm in depth, the point at a depth of 5 µm is considered to be a point at which the minimum point appears.

2. The steel sheet of claim 1, wherein the steel sheet includes a base steel sheet and an Fe plating layer formed on a surface of the base steel sheet, and the surface is a surface of the Fe plating layer.

3. The steel sheet of claim 1, wherein the difference of converted concentration of Mn is 90% or more, and the difference of converted concentration of Si is 60% or more.

4. The steel sheet of claim 1, wherein a depth at which the maximum point is formed is 0.05 to 1.0 µm.

5. A hot-dip galvanized steel sheet comprising
the steel sheet of claims 1 to 4 and a hot-dip galvanized layer formed on the steel sheet.

6. A method for manufacturing a steel sheet, comprising:
preparing a base steel sheet including by weight%, 1.0 to 8.0% of Mn, 0.05 to 3% of Si, 0.06 to 0.4% of C, 0.005 to 3.0% of Al, 0.04% or less of P, 0.015% or less of S, 0.01% or less of N, 1.5% or less of Cr, 0.005% or less of B, with a balance of Fe and inevitable impurities;
performing electroplating on the base steel sheet to form an Fe plating layer including 5 to 50 wt% of oxygen; and
annealing the base steel sheet on which the Fe plating layer is formed by maintaining at a temperature range of 600 to 950°C for 5 to 120 seconds in an annealing furnace with 1 to 70% H₂-remaining N₂ gas atmosphere, controlled at a dew point temperature of -15 to +30°C.

7. The method for manufacturing a steel sheet of claim 6, wherein an adhesion amount of the Fe plating layer is 0.5 to 3g/m².

8. The method for manufacturing a steel sheet of claims 6 or 7, wherein the complexing agent is at least one selected from alanine, glycine, serine, threonine, arginine, glutamine, glutamic acid and glycylglycine.

9. The method for manufacturing a steel sheet of claims 6 or 7, wherein the electroplating solution includes ferrous ions and ferric ions, the ferric ions have a ratio of 5 to 60% by weight relative to that of total iron ions, and a total concentration of the iron ions is 1 to 80 g per 1 L of the electroplating solution.

10. The method for manufacturing a steel sheet of claims 6 or 7, wherein the electroplating is performed under conditions of a solution temperature of 80°C or lower and a current density of 3 to 120A/dm².

11. A method for manufacturing a hot-dip galvanized steel sheet, comprising:
preparing base steel sheet including, by weight,
1.0 to 8.0% of Mn, 0.05 to 3% of Si, 0.06 to 0.4% of C, 0.005 to 3.0% of Al, 0.04% or less of P, 0.015% or less of S, 0.01% or less of N, 1.5% or less of Cr, 0.005% or less of B, with a remainder of Fe and inevitable impurities;
performing electroplating on the base steel sheet to form an Fe plating layer including 5 to 50 wt% of oxygen;
obtaining a steel sheet for plating by annealing the base steel sheet on which the Fe plating layer is formed by maintaining at a temperature range of 600 to 950°C for 5 to 120 seconds in an annealing furnace with 1 to 70%H₂-remaining N₂ gas atmosphere, controlled at a dew point temperature of -15 to +30°C; and
dipping the steel sheet for plating in a hot-dip galvanizing bath.
